(19) Europäisches Patentamt
European Patent Office
Office européen des brevets

(11) **EP 1 857 808 A1**

(12) **EUROPÄISCHE PATENTANMELDUNG**

(43) Veröffentlichungstag:
**21.11.2007 Patentblatt 2007/47**

(51) Int Cl.:
*G01N 21/35* (2006.01)        *G01N 21/55* (2006.01)

(21) Anmeldenummer: **06113946.5**

(22) Anmeldetag: **15.05.2006**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(71) Anmelder: **Sika Technology AG
6340 Baar (CH)**

(72) Erfinder:
• **Vogelsang, Jörg
8964, Rudolfstetten (CH)**
• **Richner, Roy
5027, Herznach (CH)**

(54) **Messanordnung**

(57)     Die Erfindung betrifft eine Messanordnung für Spektroskopie, mit einer optischen Strahlenquelle (9), von der ein optischer Strahl (10) erzeugbar ist, einem Kristall (2), der von dem optischen Strahl (10) durchdringbar ist, einer Probe (4), von welcher der optische Strahl (10) zumindest zum Teil absorbierbar ist, wobei die Probe (4) im Abstand ($d_M$) zu dem Kristall (2) angeordnet ist und in den zwischen der Probe (4) und dem Kristall (2) ausgebildeten Zwischenraum ein von dem optischen Strahl (10) durchdringbares, spektroskopisch inertes Medium (6) vorgesehen ist.

## FIG 1

EP 1 857 808 A1

**Beschreibung**

Die Erfindung betrifft eine Messanordnung für Spektroskopie, mit einer optischen Strahlenquelle, von der ein optischer Strahl erzeugbar ist, einem Kristall, der von dem optischen Strahl durchdringbar ist, und einer Probe, von welcher der optische Strahl zumindest zum Teil absorbierbar ist. Ferner betrifft die Erfindung ein Messverfahren für Spektroskopie, wobei ein optischer Strahl erzeugt wird, der einen Kristall durchdringt, danach an der Grenzfläche zwischen dem Kristall und einem inerten Medium oder einer Probe reflektiert wird, wobei zumindest ein Teil der Strahlung des optischen Strahls von der Probe absorbiert wird.

Derartige Messanordnungen und Messverfahren, wie beispielsweise abgeschwächte Totalreflexion (engl.: attenuated total reflectance oder ATR) oder interne Reflexionsspektroskopie (IRS), sind aus dem Stand der Technik bekannt, wobei der reflektierte Strahl Informationen über die Probe trägt. Der Kristall steht mit der Probe in direktem Kontakt, wobei ein Teil der Strahlung des optischen Strahls bis zu einer gewissen Eindringtiefe in die Probe eindringt. Ist diese Eindringtiefe zu groß, werden die von oberflächennahen Bereichen (typischerweise weniger als $1\mu m$ Tiefe) der Probe stammenden Informationen des reflektierten Strahls von Informationen aus dem Bulk- bzw. Volumenbereich der Probe überdeckt.

Im Stand der Technik wird die Eindringtiefe u.a. durch die Wahl des Kristallmaterials begrenzt. Dennoch ist sie in vielen Fällen für die Analyse oberflächennaher Bereiche zu groß, d. h. im Falle von Kontaminationen können nur Informationen über die Bulk-Eigenschaften der Probe erhalten werden, da aus der Oberfläche der Probe stammende Signale bzw. Signalanteile in den vom Bulk-Material stammenden Signalen bzw. Signalanteilen untergehen. Ferner ist der Wechsel des Kristallmaterials in herkömmlichen Messeinheiten häufig nicht möglich oder relativ aufwendig bzw. teuer.

Aufgabe der Erfindung ist es, eine Messanordnung sowie ein Messverfahren der eingangs genannten Art derart weiterzubilden, dass auf einfache und kostengünstige Weise Informationen aus oberflächennahen Bereichen, d.h. aus Bereichen in einer Tiefe von vorzugsweise weniger als $1\ \mu m$ unterhalb der Oberfläche, der Probe erhalten werden können.

Diese Aufgabe wird durch die Merkmale der unabhängigen Patentansprüche gelöst. Vorteilhafte Weiterbildungen der Erfindung sind Gegenstand untergeordneter Ansprüche.

Die erfindungsgemäße Messanordnung für Spektroskopie, insbesondere für das Verfahren der abgeschwächten Totalreflektion, weist eine optische Strahlenquelle, von der ein optischer Strahl erzeugbar ist, einen Kristall, der von dem optischen Strahl durchdringbar ist, und eine Probe auf, von welcher der optische Strahl zumindest zum Teil absorbierbar ist, wobei die Probe im Abstand zu dem Kristall angeordnet ist und in den zwischen der Probe und dem Kristall ausgebildeten Zwischenraum ein von einem Teil der Strahlung des optischen Strahls durchdringbares, spektroskopisch inertes Medium vorgesehen oder eingebracht ist.

Die Erfinder haben erkannt, dass durch Ausbilden eines Abstands zwischen dem Kristall und der Probe sowie durch Vorsehen oder Einbringen eines von einem Teil der Strahlung eines optischen Strahls durchdringbaren, spektroskopisch inerten Mediums in diesen Abstand die Eindringtiefe der Strahlung in die Probe reduzierbar ist. Das Medium bildet dabei einen inerten Spacer, d. h. einen spektroskopisch weitgehend neutralen Abstandshalter, so dass die Eindringkeule der optischen Strahlung nicht mehr in der Lage ist, so tief in das Substrat einzudringen. Hierdurch wird das gesuchte Signal weniger durch Bulk-Signale überdeckt. Zwar kann durch den inerten Spacer die gesamte messbare Signalstärke sinken, die interessierenden Signale sind jedoch deutlich und können entsprechend verstärkt werden. Ein Austausch des Kristalls ist somit nicht mehr für die Reduktion der Eindringtiefe des Strahls in die Probe erforderlich. Das erfindungsgemäße Prinzip wurde mit Infrarotspektren überprüft und verifiziert, so dass bevorzugt die optische Strahlenquelle eine Infrarotstrahlenquelle und der optische Strahl ein Infrarotstrahl ist. Die erfindungsgemäße Messanordnung kann z. B. zum Aufbau einer Messzelle verwendet werden.

Als spektroskopisch inertes Medium wird insbesondere ein Stoff verwendet, der sich hinsichtlich des zu beobachtenden Spektrums neutral oder zumindest weitgehend neutral verhält. Unter inertem Medium versteht man im ganzen vorliegenden Dokument ein Medium, welches nicht chemisch reagiert, sowie welches insbesondere kaum oder wenig vom Strahl, zumindest im Messbereich, absorbiert. Bevorzugt trägt das inerte Medium keine oder lediglich geringfügig Signalanteile zu dem zu beobachtenden Spektrum, insbesondere im interessierenden Bereich des Spektrums, bei. Das inerte Medium kann z.B. von einem Stoff gebildet sein, der in Bezug auf den verwendeten optischen Strahl, insbesondere hinsichtlich Infrarotlicht, optisch weitgehend inert ist. Bevorzugt beeinflusst das inerte Medium den Verlauf des optischen Strahls nicht oder lediglich geringfügig, wobei der Brechungsindex des inerten Mediums an die Messanordnung angepasst ist.

Das inerte Medium erstreckt sich insbesondere von einer der Probe zugewandten Oberfläche des Kristalls bis zu einer dem Kristall zugewandten Oberfläche der Probe, so dass möglichst wenig Phasenübergänge zwischen der Probe und dem Kristall vorhanden sind, welche den Verlauf des optischen Strahls negativ beeinflussen könnten. Bevorzugt entspricht der Abstand zwischen der Probe und dem Kristall der Dicke des inerten Mediums bzw. der inerten Schicht. Das inerte Medium kann eine Flüssigkeit sein, die z. B. durch eine Anreibeflüssigkeit, durch einen flüssigen Kohlenwasserstoff bzw. durch ein Mineralöl oder durch ein Paraffinöl gebildet ist. Als besonders geeignet hat sich Nujol oder Nujol-Mineralöl für das inerte Medium erwiesen. Ebenfalls geeignet sind Hexachlorbutadien, Tetrachlorkohlenstoff oder Fluorolube®. Grundsätzlich ist aber auch eine Folie oder eine Folienanordnung für das inerte Medium möglich, wobei allerdings störende Phasengrenzen ausgebildet werden können. Ebenso sind Kombinationen aus flüssigen und festen, spektroskopisch weitgehend inerten Materialen verwendbar.

Das inerte Medium ist bevorzugt von einem Begrenzungskörper umringt. Vorzugsweise ist der Begrenzungskörper aus einem elastischen Material. Der Begrenzungskörper ist z.B. als O-Ring ausgebildet, er kann aber auch in Form einer Folie vorliegen. Der Begrenzungskörper hat vorzugsweise eine Ringform oder eine eckige, beispielsweise eine rechteckige oder dreieckige, Form und umgibt das inerte Medium vorzugsweise vollständig. Somit kann vermieden werden, dass insbesondere das als Flüssigkeit ausgebildete inerte Medium aus dem Bereich zwischen dem Kristall und der Probe abfließt.

Die Strahlung des optischen Strahls kann in die Probe bis zu einer Tiefe eindringen, die insbesondere von dem Abstand zwischen dem Kristall und der Probe abhängig ist. Zum Ändern dieser Probeneindringtiefe kann der Abstand zwischen der Probe und dem Kristall mittels einer Verstellvorrichtung variiert werden. Dabei kann der Begrenzungskörper zwischen dem Kristall und der Probe angeordnet und aus einem elastischen Material hergestellt sein, so dass der Abstand zwischen der Probe und dem Kristall gegen eine Federkraft des Begrenzungskörpers verringerbar ist. Dies hat den Vorteil, dass bei einer Vergrößerung des Abstands zwischen der Probe und dem Kristall die Federkraft des gespannten Begrenzungskörpers genutzt werden kann, wenn die Verstellvorrichtung gelöst bzw. hinsichtlich einer Vergrößerung des Abstands betätigt wird. Somit ist ein besonders einfacher Aufbau der Verstellvorrichtung möglich, insbesondere kann diese lediglich an der Probe anliegen, ohne an dieser befestigt zu sein. Die Verstellvorrichtung weist bevorzugt ein Druckelement auf, welches zum Verringern des Abstands einen Druck auf die Probe ausübt und zum Vergrößern des Abstands diesen Druck verringert. Das Druckelement ist insbesondere ein starrer Körper und kann z. B. als Schraube ausgebildet sein. Ferner hat ein elastischer Begrenzungskörper den Vorteil, dass er für die unter Druck stehende Flüssigkeit beim Verringern des Abstands Ausweichmöglichkeiten schafft, wenn die verwendete Flüssigkeit inkompressibel ist. Insbesondere ist mittels eines elastischen Begrenzungskörpers bei einer Verringerung des Abstands eine Vergrößerung der von dem Begrenzungskörper umringten Fläche möglich, indem sich dieser verformt.

Der Kristall besteht vorzugsweise aus einem Material mit einem hohen Brechungsindex, das heisst vorzugsweise mit einem Brechungsindex von 2.3 bis 4.01 bei 2000 cm$^{-1}$. Vorzugsweise enthält oder besteht der Kristall aus Diamant, alternativ sind aber auch Zinkselenid (ZnSe), Silizium oder Germanium geeignete Materialien für den Kristall. Besonders bevorzugt ist ein Kristall, welcher aus Diamant besteht.

Die Messanordnung kann zur Analyse von oberflächennahen Bereichen einer Probe verwendet werden, die z. B. im Wesentlichen materialhomogen ist. Es ist aber auch möglich, mittels der erfindungsgemäßen Messanordnung eine Oberflächenbeschichtung der Probe zu analysieren. Somit kann die Probe auf ihrer dem Kristall zugewandten Seite mit einer Oberflächenbeschichtung versehen sein, die z.B. aus einem anderen Material als das Volumenmaterial der Probe bestehen kann. Oberflächennahe Bereiche sind u. a. dann interessant zu untersuchen, wenn sich Kontaminationen auf dem Material befinden, wenn dünne Schichten (z.B. <1 μm) aufgebracht sind, oder wenn sich aufgrund von physikalisch-chemischen Vorgängen die grenzflächennahe Schicht anders zusammensetzt als das Probematerial.

Entlang eines von dem optischen Strahl bzw. der Strahlung zu Beginn zurückgelegten oder zurücklegbaren Wegs können der Kristall, das Medium und die Probe hintereinander angeordnet sein. Insbesondere verläuft dieser Weg bzw. Strahl durch den Kristall hindurch, wird an der Grenzfläche zwischen dem Kristall und dem Medium reflektiert, und zumindest ein Teil der Strahlung des optischen Strahls dringt in das Medium bzw. die Probe ein und wird teilweise von diesem bzw. dieser absorbiert. Dadurch laufen Anteile der Strahlung ausgehend von der optischen Strahlenquelle zunächst durch den Kristall und danach durch das Medium hindurch, bevor sie auf die Probe treffen. Wird ein Teil der Strahlung von der Probe absorbiert, fehlt er im reflektierten Strahl.

Der reflektierte Strahl wird bevorzugt spektroskopisch analysiert, wofür ein Analysator vorgesehen werden kann, auf den der optische Strahl, nach seiner Reflexion an der Grenzfläche zwischen dem Kristall und dem Medium bzw. der Probe auftrifft. Der Strahl kann mindestens einfach, bevorzugt mehrfach zwischen dem Kristall hin und her reflektiert werden, und dabei kann ein Teil der Strahlung das inerte Medium mehrfach durchdringen, bevor der reflektierte Strahl auf den Analysator auftrifft.

Die Erfindung betrifft ferner ein Messverfahren für Spektroskopie, insbesondere für die abgeschwächte Totalreflektion, wobei ein optischer Strahl erzeugt wird, der einen Kristall durchdringt, danach an der Grenzfläche zwischen dem Kristall und einem inerten Medium oder einer Probe reflektiert wird, wobei zumindest ein Teil der Strahlung des optischen Strahls in die Probe bzw. das Medium eindringt und zumindest teilweise absorbiert wird. Die Probe wird im Abstand zu dem Kristall angeordnet, wobei in den zwischen der Probe und dem Kristall ausgebildeten Zwischenraum ein spektroskopisch inertes Medium vorgesehen oder eingebracht wird, welches von einem Anteil der Strahlung des optischen Strahls vor dem Auftreffen auf der Probe wenigstens einmal durchdrungen wird.

Mit dem erfindungsgemäßen Verfahren sind dieselben Vorteile wie mit der erfindungsgemäßen Messanordnung erzielbar. Ferner können der optische Strahl, der Kristall, die Probe und das Medium in gleicher Weise weitergebildet sein wie bei der erfindungsgemäßen Messanordnung.

Der optische Strahl wird, beispielsweise bei der abgeschwächten Totalreflektion, an der Grenzfläche zwischen dem Kristall und einer Probe oder einem Medium reflektiert. Dabei dringt ein Teil der Strahlung des optischen Strahls geringfügig in die Probe oder das Medium ein, wird von diesem teilweise absorbiert und dringt abgeschwächt wieder in den Kristall ein, wodurch der Strahl Informationen über die Probe trägt.

Der reflektierte und von der Probe abgeschwächte Strahl wird bevorzugt spektroskopisch analysiert, wofür ein Analysator vorgesehen werden kann, auf den der von der Probe oder von deren Oberflächenbeschichtung abgeschwächte Strahl auftrifft. Ferner kann der Strahl vor der Analyse mehrfach zwischen dem Kristall hin und her reflektiert werden und dabei kann ein Teil der Strahlung das Medium mehrfach durchdringen.

Die Strahlung des optischen Strahls kann in die Probe bis zu einer Tiefe eindringen, die insbesondere von dem Abstand zwischen dem Kristall und der Probe abhängig ist. Zum Ändern dieser Probeneindringtiefe kann der Abstand zwischen der Probe und dem Kristall variiert werden, wofür eine Verstellvorrichtung vorgesehen werden kann.

Das erfindungsgemäße Messverfahren wird insbesondere unter Verwendung der erfindungsgemäßen Messanordnung durchgeführt.

Die erfindungsgemäße Messanordnung sowie das erfindungsgemäße Messverfahren werden insbesondere bei der ATR-FTIR-Spektroskopie eingesetzt, wobei die Abkürzungen "ATR" für abgeschwächte Totalreflektion (engl.: attenuated total reflectance), "FT" für Fourier-Transformation und "IR" für Infrarot stehen. Diese Art der Infrarotspektroskopie erlaubt es, Spektren ohne großen Präparationsaufwand aufzunehmen. Hierbei dringt ein Messstrahl teilweise in das auf dem Kristall befindliche inerte Medium, und je nach Abstand der Probe zum Kristall auch in die Probe ein. Die Eindringtiefe oder Abtasttiefe des optischen Strahls in das inerte Medium bzw. in die Probe oder Oberflächenbeschichtung kann durch die Formel

$$d_P = \frac{\lambda}{2\pi(n_1^2 \sin^2 \theta_1 - n_2^2)^{\frac{1}{2}}}$$

genähert werden, wobei $d_P$ die Abtasttiefe, $n_1$ und $n_2$ die Brechungsindizes der beteiligten Materialien und $\theta_1$ den Einfallswinkel des optischen Strahls hinsichtlich des Lots zum ATR-Element und $\lambda$ die Wellenlänge des Messstrahls kennzeichnen.

Vorzugsweise wird nun der Abstand zwischen der Probe und dem Kristall mit einer Verstellvorrichtung der vorliegenden Erfindung so eingestellt, dass der Strahl in die oberste Schicht der Probe, vorzugsweise in die Oberflächenbeschichtung, vorzugsweise aber nicht zu tief in die Probe, eindringt, so dass Informationen über die Beschaffenheit der Oberfläche der Probe bzw. der Oberflächenbeschichtung erhalten werden. Vorzugsweise ist daher der Abstand zwischen dem Kristall und der Probe, bzw. der Oberflächenbeschichtung, etwas kleiner als die Eindringtiefe $d_P$ des Strahls in die Probe, bzw. in die Oberflächenbeschichtung. Auf diese Weise ist es möglich, dünne Schichten von bis zu 5 nm zu analysieren.

Im Folgenden wird die Erfindung anhand bevorzugter Ausführungsbeispiele mit Hilfe der Figuren näher beschrieben, wobei nur die zum Verständnis der Erfindung notwendigen Merkmale dargestellt sind. Gleiche Merkmale sind in den verschiedenen Figuren mit den gleichen Bezugszeichen versehen.

Es zeigen im Einzelnen:

FIG 1: eine schematische Ansicht einer Messanordnung gemäß einer ersten Ausführungsform der Erfindung;

FIG 2: eine zweite schematische Ansicht der Ausführungsform nach FIG 1;

FIG 3: eine dritte schematische Ansicht der Ausführungsform nach FIG 1;

FIG 4: eine schematische Ansicht einer Messanordnung gemäß einer zweiten Ausführungsform der Erfindung;

FIG 5: mehrere mit einer erfindungsgemäßen Messanordnung aufgenommene Messkurven für eine erste Probe;

FIG 6: mehrere mit einer erfindungsgemäßen Messanordnung aufgenommene Messkurven für eine zweite Probe;

FIG 7: mehrere mit einer herkömmlichen Messanordnung aufgenommene Messkurven.

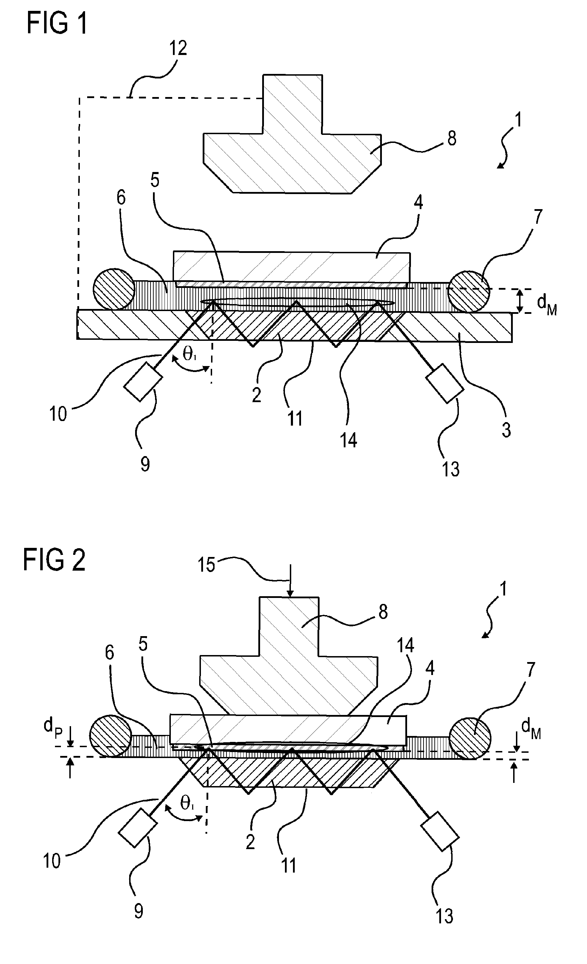

Aus **Figur 1** ist eine schematische Ansicht einer Messanordnung 1 gemäß einer ersten Ausführungsform der Erfindung ersichtlich, wobei ein aus Diamant bestehender Kristall 2 von einer Halterung 3 gehalten ist. Im Abstand $d_M$ zum Kristall 2 ist eine Probe 4 angeordnet, die an ihrer dem Kristall 2 zugewandten Seite mit einer Oberflächenbeschichtung 5 versehen ist. Zwischen dem Kristall 2 und der Probe 4 ist ein flüssiges Medium (inertes Medium) 6 vorgesehen, welches von einem als O-Ring ausgebildeten Begrenzungskörper 7 umringt ist und bevorzugt aus Mineralöl bzw. Nujol besteht. Das Medium 6 erstreckt sich von einer der Probe 4 zugewandten Oberfläche des Kristalls 2 bis hin zu der dem Kristall 2 zugewandten Oberflächenbeschichtung 5 der Probe 4 und füllt den Zwischenraum zwischen dem Kristall 2 und der Probe 4 vollständig aus. Die Probe 4 wird dabei von dem Medium 6 im Abstand $d_M$ zum Kristall 2 gehalten, so dass die Probe 4 auf dem flüssigen Medium 6 schwimmt und dabei geringfügig in dieses eintaucht.

Ferner ist ein Druckelement 8 vorgesehen, welches über eine schematisch dargestellte Verbindung 12 (zumindest mittelbar) mechanisch mit der Halterung 3 verbunden ist und z. B. als Schraube ausgebildet sein kann. Gemäß Figur 1 ist das Druckelement im Abstand zu der Probe 4 angeordnet und übt somit keinen Druck auf diese aus.

Von einer Infrarotstrahlenquelle 9 wird ein Infrarotstrahl 10 erzeugt, der auf einer der Probe 4 abgewandten Seite 11 des Kristalls 2 in diesen eintritt, den Kristall 2 durchläuft, an der Grenzfläche zum Medium 6 reflektiert wird, und ein Teil der Strahlung auf einer der Probe 4 zugewandten Seite des Kristalls 2 aus diesem heraus- und in das Medium 6 eintritt. Die Strahlung des Strahls 10 dringt in dieser Anordnung nicht in die Oberflächenbeschichtung 5 ein. Nach mehrmaliger Hin- und Her-Reflektion innerhalb des Kristalls 2 tritt der Infrarotstrahl 10 aus dem Kristall 2 aus und trifft auf einen Analysator 13, von dem ein Spektrum des Strahls 10 analysierbar ist. Da der Strahl 10 nicht in die Probe 4 eindringt, enthält dieses Spektrum keine oder wenig Informationen über das Volumenmaterial der Probe 4 sondern lediglich über das Medium 6. Allerdings können, je nach Abstand $d_M$, Informationen über die Oberflächenbeschichtung 5 der Probe 4 gewonnen werden. Die in dem Medium 6 schematisch dargestellte Ellipse soll dabei den Analysebereich 14 des Strahls 10 zwischen Kristall 2 und Probe 4 verdeutlichen.

Aus **Figur 2** ist die Messanordnung 1 in einem Zustand ersichtlich, in dem das Druckelement 8 mit der dem Kristall 2 abgewandten Seite der Probe 4 in Kontakt steht und diese in Richtung des Pfeils 15 auf den Kristall 2 zu drückt. Hierdurch wird der Abstand $d_M$ zwischen dem Kristall 2 und der Probe 4 im Vergleich zu Figur 1 verringert, so dass der Analysebereich 14 in Richtung Volumenmaterial der Probe 4 verschoben ist. Vorzugsweise ist der Abstand $d_M$ zwischen dem Kristall 2 und der Probe 4, bzw. der Oberflächenbeschichtung 5, etwas kleiner als die Eindringtiefe $d_P$ des Strahls 10, wodurch der Analysebereich 14 nicht oder nur geringfügig in das Volumenmaterial (Bulk-Material) der Probe 4 eindringt, so dass der reflektierte und aus dem Kristall 2 austretende Strahl 10 Informationen über die Oberflächenbeschichtung 5 aufweist, ohne dass diese Informationen von zusätzlichen Informationen überdeckt werden, die aus dem Volumenbereich der Probe 4 stammen. Somit können die aus der Oberflächenbeschichtung 5 stammenden Informationen ohne Schwierigkeiten, z. B. mittels des Analysators 13, gewonnen werden. Die Eindringtiefe des Strahls 10 in das Medium 6 beziehungsweise in die Probe 4 ist dabei mit $d_P$ bezeichnet.

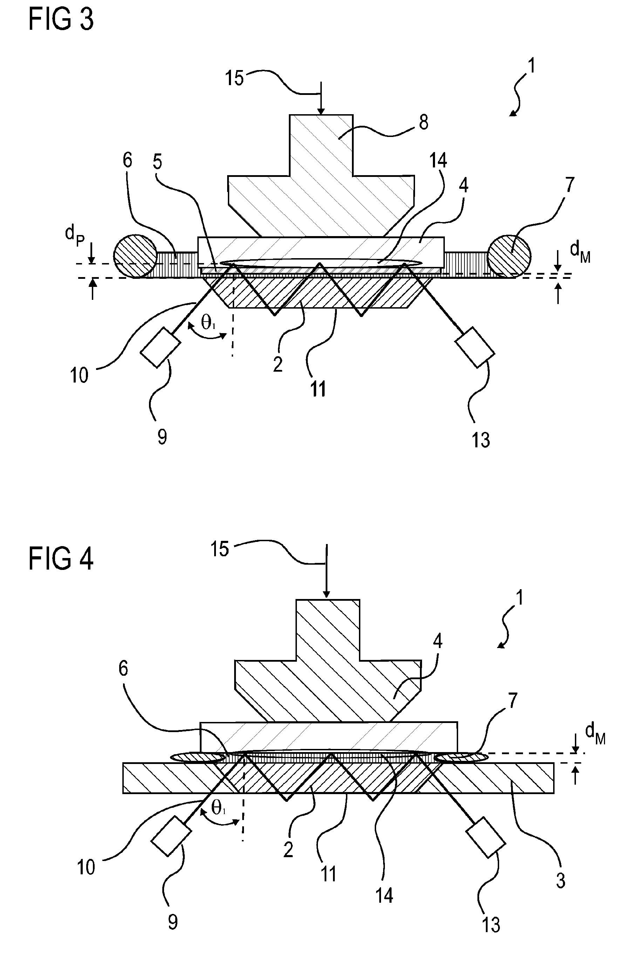

Aus **Figur 3** ist die Messanordnung 1 in einem dritten Zustand ersichtlich, wobei der Abstand $d_M$ gegenüber Figur 2 noch weiter reduziert worden ist, so dass der Reflektionsbereich 14 zu einem nicht unerheblichen Teil im Volumenbereich der Probe 4 liegt. Dies kann zur Folge haben, dass die aus dem Volumenbereich der Probe 4 stammenden Informationen des reflektierten Strahls 10 die aus der Oberflächenbeschichtung 5 stammenden Informationen des reflektierten Strahls 10 überdecken. Die resultierende Information kennzeichnet somit den Volumenbereich der Probe 4 und nicht mehr oder nur noch geringfügig die Oberflächenbeschichtung 5.

Aus **Figur 4** ist eine Messanordnung 1 gemäß einer zweiten Ausführungsform der Erfindung ersichtlich, wobei ähnliche oder identische Merkmale mit denselben Bezugszeichen wie bei der ersten Ausführungsform bezeichnet sind. Die zweite Ausführungsform stimmt im Wesentlichen mit der ersten Ausführungsform überein, allerdings ist gemäß der zweiten Ausführungsform der Begrenzungskörper 7 zwischen der Probe 4 und dem Kristall 2 bzw. der Kristallhalterung 3 angeordnet. Durch Ausüben eines Drucks in Richtung des Pfeils 15 auf die Probe 4 kann der Abstand $d_M$ zwischen der Probe 4 und dem Kristall 2 reduziert werden, wobei sich der aus einem elastischen Material hergestellte und als O-Ring ausgebildete Begrenzungskörper 7 verformt. Wird nun der in Richtung des Pfeils 15 auf die Probe 4 wirkende Druck verringert oder weggelassen, drängt der Begrenzungskörper 7 auf Grund seiner elastischen Eigenschaften die Probe 4 von dem Kristall 2 weg, so dass der Abstand $d_M$ zwischen der Probe 4 und dem Kristall 2 vergrößert wird. Da das inerte Medium 6 regelmäßig nicht oder lediglich geringfügig kompressibel ist, schafft der elastisch ausgebildete Begrenzungskörper 7 bei einer Reduzierung des Abstandes $d_M$ ferner die Möglichkeit, durch Verformung zusätzlichen Raum für das verdrängte Medium 6 zu schaffen. Ferner weist die Probe 4 gemäß der zweiten Ausführungsform bevorzugt keine Oberflächenbeschichtung auf, so dass mit der Messanordnung 1 gemäß Figur 4 die oberflächennahen Bereiche des Probenmaterials analysiert werden können.

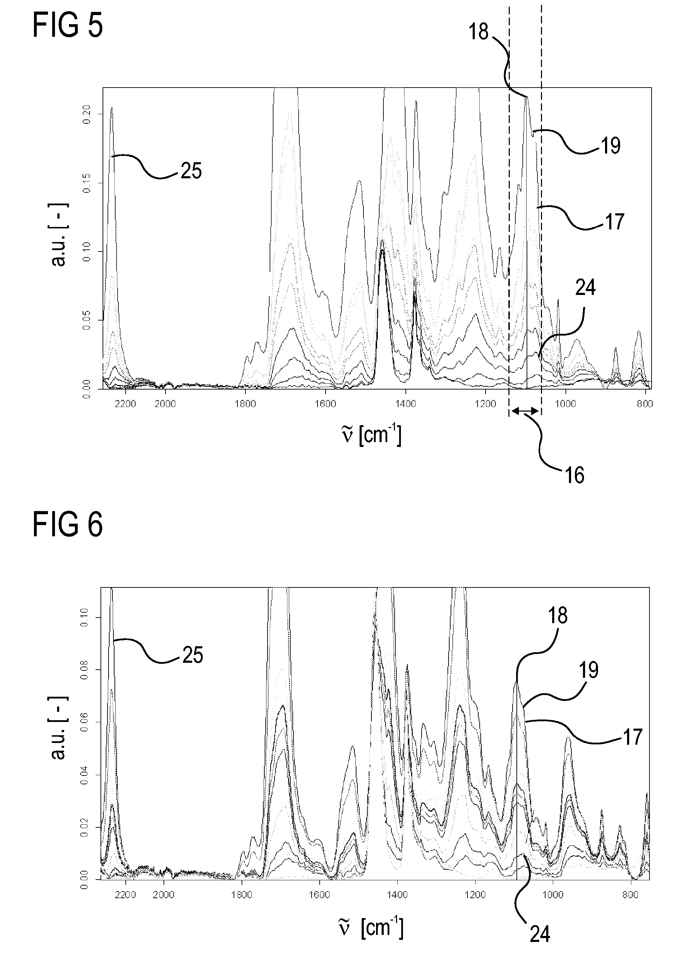

Aus **Figur 5** sind mehrere Messkurven bzw. Absorptionsspektren einer ersten gemessenen Probe ersichtlich, die mit einer Messanordnung 1 gemäß der ersten Ausführungsform (siehe Figur 1 bis 3) aufgenommen wurden. Die Absorbanzen (Abkürzung a.u. von engl.: absorbance units) werden dabei als Funktion der Wellenzahl $\tilde{v}$ (cm$^{-1}$) dargestellt. Durch Erhöhung des Drucks auf das Druckelement 8 der Messanordnung 1 nimmt die Intensität des Signals bei einer Wellenzahl von 1100 cm$^{-1}$ zu, wodurch die in dieser Figur dargestellten verschiedenen Messkurven erhalten werden. Mit zunehmendem Druck auf das Druckelement 8 wird der Analysebereich 4 des optischen Strahls 10 tiefer in die Oberflächenbeschichtung 5 bzw. in die Probe 4 verschoben.

Es wurde als Probe 4 ein PVC Substrat untersucht, welches als Oberflächenbeschichtung 5 einen Primer (Sika® Primer 215, kommerziell erhältlich bei Sika Schweiz AG) aufwies. Der Primer wurde vor dem Auftragen auf das PVC Substrat im Verhältnis 2 zu 1 mit einem inerten flüchtigen Lösungsmittel, beispielsweise Ethyl- oder Butylacetat oder Metylethylketon verdünnt.

Nach einer Ablüftezeit des Primers von mindestens 10 bis 15 Minuten wurde die Probe untersucht. Als Medium 6 wurde ein unverdünntes Mineralöl (Nujol) verwendet.

Der Bereich zwischen den gestrichelten Linien 16 kennzeichnet den in diesem Anwendungsbeispiel interessierenden Bereich mit einer Wellenzahl von ca. 1050 bis 1120 cm-[1]. Die Messkurve 17 stellt ein Analysespektrum dar, welches bei höherem Druck als bei der Messkurve 24 auf das Druckelement 8 erhalten wurde und bei welchem der Analysebereich 14 somit tiefer in das Volumenmaterial der Probe 4 hineintritt. Die Messkurve 17 weist im interessierenden Bereich ein erstes relatives Maximum 18 bei einer Wellenzahl von ca. 1100 cm-[1] und ein zweites relatives Maximum 19 rechts von dem Maximum 18 auf. Das Maximum 18 tritt deutlich hervor und ist hierbei auf das Volumenmaterial der Probe 4 zurückzuführen, die hier aus Polyvinylchlorid (PVC) besteht, wohingegen das Maximum 19 auf die Oberflächenbeschichtung 5 zurückzuführen ist, die hier aus einem Primer bzw. Haftvermittler besteht.

Die Messkurve 24 stellt ein Analysespektrum dar, welches bei kleinerem Druck als bei der Messkurve 17 auf das Druckelement 8 erhalten wurde. Das Maximum 19 tritt hier deutlicher hervor als bei der Messkurve 17. Bei dieser Messung dringt der Reflektionsbereich 14 nur relativ geringfügig in das Volumenmaterial der Probe 4 ein (vgl. FIG 2), so dass das Maximum 19 größer als das Maximum 18 ist und sich deutlich von diesem abhebt. Dadurch erhält man Information über die Oberflächenbeschaffenheit einer Probe.

Aus **Figur 6** ist ein Spektrum mit einer Messkurve 17 einer zweiten Probe ersichtlich, wobei die Oberflächenbeschichtung 5 vor dem Auftragen auf die Probe 4 im Verhältnis 1 zu 10 mit einem flüchtigen Lösungsmittel verdünnt worden ist. Ansonsten ist die Messanordnung unverändert gegenüber den Messanordnungen, die zur Erfassung der Spektren gemäß Figur 5 verwendet worden sind. Die Oberflächenbeschichtung 5 weist durch das Verdünnen eine dünnere Schicht auf und daher dringt der Analysebereich 14 bei höherem Druck auf das Druckelement 8 nun noch tiefer in das Volumenmaterial der Probe 4 ein, so dass das Maximum 18 den interessierenden Bereich der Kurve 17 dominiert und das relative Maximum 19 bis auf eine Schulter der Kurve 17 rechts von dem Maximum 18 reduziert ist.

Mit dem Bezugszeichen 24 ist eine Messkurve für den Haftvermittler bzw. Primer 5 dargestellt, die im interessierenden Bereich (Wellenzahl bei etwa 1100 cm-[1]) ein relatives Maximum aufweist. Die Absorption des Primers 5 und die Absorption des Volumenmaterials der Probe 4 addieren sich bei der Messkurve 17 in dem interessierenden Bereich. Ferner weist der Primer 5 Isocyanat als funktionelle Gruppe auf, die einen Ausschlag bzw. ein scharfes Signal 25 im Spektrum liefert.

Mit der erfindungsgemäßen Messanordnung 1 ist es nun möglich, durch eine Variation des Abstands $d_M$ zwischen dem Kristall 2 und der Probe 4 die Probeneindringtiefe des optischen Strahls 10 in die Probe 4 bzw.

in die Oberflächenbeschichtung 5 zu verändern. Damit werden unterschiedliche Absorptionsspektren erhalten, welche Informationen über die Beschaffenheit einer Probe in unterschiedlichen Tiefen liefern.

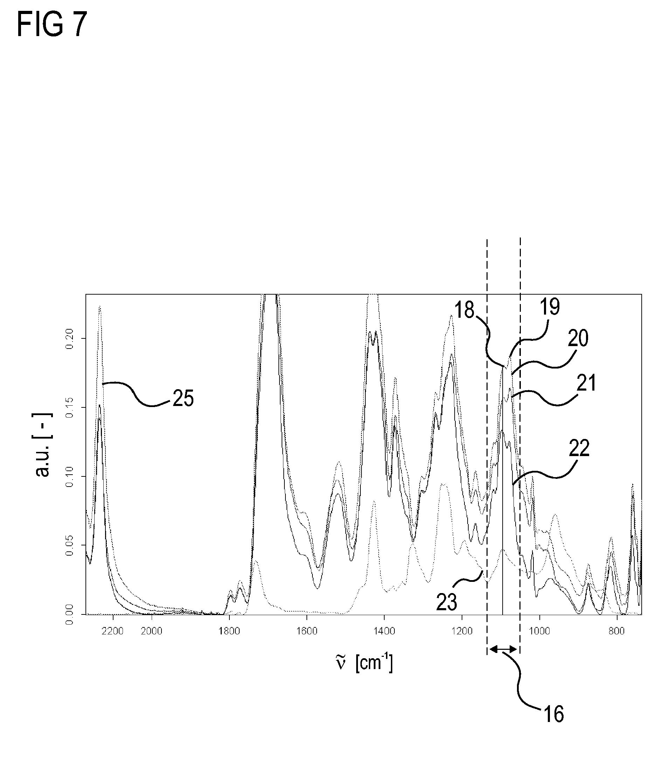

Aus **Figur 7** sind mehrere Messkurven ersichtlich, die mit einer herkömmlichen Messanordnung durchgeführt worden sind, wobei der Kristall 2 unmittelbar mit der Probe 4 bzw. mit der Oberflächenbeschichtung 5 in Kontakt steht und wobei kein inertes Medium 6 verwendet worden ist. Die Kurven 20 und 21 sind dabei unter Verwendung einer relativ dicken Oberflächenbeschichtung 5 gewonnen worden, so dass der Analysebereich 14 im Wesentlichen innerhalb der Oberflächenbeschichtung 5 liegt. Daher ist der bei den Kurven 20 und 21 interessierende Bereich 16 von der Oberflächenbeschichtung 5 gekennzeichnet. Insbesondere ist das relative Maximum 19 größer als das links davon liegende relative Maximum 18.

Bei der Messkurve 22 ist die Oberflächenbeschichtung 5 im Verhältnis 2:1 mit einem Lösungsmittel wie bei Figur 5 beschrieben vor dem Auftragen auf die Probe 4 verdünnt worden. Dadurch dringt der Strahl 10 tiefer in die Probe 4 ein und der Analysebereich 14 reicht deutlich in den Volumenbereich der Probe 4 hinein. Zu erkennen ist, dass im interessierenden Bereich das dem Volumenmaterial der Probe 4 zugeordnete relative Maximum größer als das rechts davon liegende und der Oberflächenbeschichtung zugeordnete relative Maximum ist.

Schließlich zeigt die Messkurve 23 ein reines PVC-Spektrum, d. h. eine Probe 4 ohne Oberflächenbeschichtung 5. Aus der Messkurve 23 ist ableitbar, dass das bei einer Wellenzahl von etwa 1100 cm-[1] liegende relative Maximum 18 der Messkurven auf das Volumenmaterial bzw. auf PVC zurückzuführen ist.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

**Bezugszeichenliste**

| | |
|---|---|
| 1 | Messanordnung |
| 2 | Kristall |
| 3 | Halterung |
| 4 | Probe |
| 5 | Oberflächenbeschichtung der Probe |
| 6 | inertes Medium |
| 7 | Begrenzungskörper |
| 8 | Druckelement |
| 9 | Strahlenquelle |
| 10 | optischer Strahl |
| 11 | Seite des Kristalls, der Probe abgewandt |
| 12 | Verbindung zwischen Halterung und Druckelement |

| | |
|---|---|
| **13** | **Analysator** |
| 14 | Analysebereich |
| 15 | Pfeil |
| 16 | Bereich bei einer Wellenzahl von ca. 1050 bis 1120 $cm^{-1}$ |
| 17 | Messkurve |
| 18 | relatives Maximum der Messkurve |
| 19 | relatives Maximum der Messkurve |
| 20 | Messkurve |
| 21 | Messkurve |
| 22 | Messkurve |
| 23 | Messkurve, Probenmaterial bzw. PVC |
| 24 | Messkurve, Primer |
| 25 | Ausschlag oder Spitze, funktionelle Gruppe des Primers |
| $d_M$ | Abstand zwischen Kristall und Probe |
| $d_P$ | Eindringtiefe/Abtasttiefe des Strahls in die Probe |
| $\theta_1$ | Einfallswinkel des optischen Strahls |

**Patentansprüche**

1. Messanordnung für Spektroskopie, mit einer optischen Strahlenquelle (9), von der ein optischer Strahl (10) erzeugbar ist, einem Kristall (2), der von dem optischen Strahl (10) durchdringbar ist, einer Probe (4), von welcher die Strahlung des optischen Strahls (10) zumindest zum Teil absorbierbar ist, **dadurch gekennzeichnet, dass**

   - die Probe (4) im Abstand $(d_M)$ zu dem Kristall (2) angeordnet ist und
   - in den zwischen der Probe (4) und dem Kristall (2) ausgebildeten Zwischenraum ein von der Strahlung des optischen Strahls (10) durchdringbares, spektroskopisch inertes Medium (6) vorgesehen ist.

2. Messanordnung nach Anspruch 1, **dadurch gekennzeichnet, dass** die optische Strahlenquelle (9) eine Infrarotstrahlenquelle und der optische Strahl (10) ein Infrarotstrahl ist.

3. Messanordnung nach Anspruch 1 oder 2, **dadurch gekennzeichnet, dass** sich das inerte Medium (6) von einer der Probe (4) zugewandten Oberfläche des Kristalls (2) bis zu einer dem Kristall (2) zugewandten Oberfläche der Probe (4) erstreckt.

4. Messanordnung nach einem der vorangehenden Ansprüche, **dadurch gekennzeichnet, dass** das inerte Medium (6) eine Flüssigkeit, insbesondere eine Anreibeflüssigkeit oder ein flüssiger Kohlenwasserstoff ist.

5. Messanordnung nach einem der vorangehenden Ansprüche, **gekennzeichnet durch** einen das inerte Medium (6) umringenden Begrenzungskörper (7).

6. Messanordnung nach einem der vorangehenden Ansprüche, **dadurch gekennzeichnet, dass** der Abstand $(d_m)$ zwischen der Probe (4) und dem Kristall (2) mittels einer Verstellvorrichtung (8) variierbar ist.

7. Messanordnung nach einem der vorangehenden Ansprüche, **dadurch gekennzeichnet, dass** der Kristall (2) Diamant, Germanium, Zinkselenid oder Silizium enthält oder daraus besteht.

8. Messanordnung nach einem der vorangehenden Ansprüche, **dadurch gekennzeichnet, dass** die Probe (4) auf ihrer dem Kristall (2) zugewandten Seite mit einer Oberflächenbeschichtung (5) versehen ist.

9. Messanordnung nach einem der vorangehenden Ansprüche, **gekennzeichnet durch** einen Analysator (13), von dem der reflektierte optische Strahl (10) spektroskopisch analysierbar ist.

10. Messanordnung nach einem der vorangehenden Ansprüche, **dadurch gekennzeichnet, dass** die Messanordnung für abgeschwächte Totalreflexion (ATR) geeignet ist und der Kristall (2) ein ATR Kristall ist.

11. Messverfahren für Spektroskopie, wobei ein optischer Strahl (10) erzeugt wird, der einen Kristall (2) durchdringt, danach an der Grenzfläche zwischen dem Kristall (2) und einem inerten Medium (6) oder einer Probe (4) reflektiert wird, wobei zumindest ein Teil der Strahlung des optischen Strahls (10) von der Probe (4) absorbiert wird, **dadurch gekennzeichnet, dass**

    - die Probe (4) im Abstand $(d_M)$ zu dem Kristall (2) angeordnet wird und
    - in dem zwischen der Probe (4) und dem Kristall (2) ausgebildeten Zwischenraum ein spektroskopisch inertes Medium (6) vorgesehen wird, welches ein Teil der Strahlung des optischen Strahls (10) vor dem Auftreffen auf der Probe (4) wenigstens einmal durchdringt.

12. Messverfahren nach Anspruch 11, **dadurch gekennzeichnet, dass** der reflektierte Strahl (10) spektroskopisch analysiert wird.

13. Messverfahren nach Anspruch 12, **dadurch gekennzeichnet, dass** der optische Strahl (10) vor der Analyse mehrfach innerhalb des Kristalls (2) hin und her reflektiert wird und dabei ein Teil der Strahlung des optischen Strahls (10) mehrfach das Medium (6) durchdringt.

14. Messverfahren nach einem der Ansprüche 11 bis 13, **dadurch gekennzeichnet, dass** der optische Strahl (10) ein Infrarotstrahl ist.

15. Messverfahren nach einem der Ansprüche 11 bis 14, **dadurch gekennzeichnet, dass** der Kristall (2) Diamant, Germanium, Zinkselenid oder Silizium enthält oder daraus besteht.

16. Messverfahren nach einem der Ansprüche 11 bis 15, **dadurch gekennzeichnet, dass** das inerte Medium (6) eine Flüssigkeit, insbesondere eine Anreibeflüssigkeit oder ein flüssiger Kohlenwasserstoff ist.

17. Messverfahren nach einem der Ansprüche 11 bis 16, **dadurch gekennzeichnet, dass** der Abstand ($d_M$) zwischen der Probe (4) und dem Kristall (2) variiert wird.

18. Messverfahren nach einem der Ansprüche 11 bis 17, **dadurch gekennzeichnet, dass** die Eindringtiefe ($d_P$) des optischen Strahls (10) in die Probe (4) in Abhängigkeit vom Abstand ($d_M$) zwischen der Probe (4) und dem Kristall (2) variiert wird.

19. Verwendung der Messanordnung nach einem der Ansprüche 1 bis 10 zur Untersuchung von oberflächennahen Bereichen oder Oberflächenbeschichtungen einer Probe.

FIG 1

FIG 2

## FIG 3

## FIG 4

## FIG 5

## FIG 6

FIG 7

**EP 1 857 808 A1**

**Europäisches Patentamt**

## EUROPÄISCHER RECHERCHENBERICHT

Nummer der Anmeldung

EP 06 11 3946

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 198 37 437 A1 (BIOTUL BIO INSTR GMBH [DE] JANDRATEK GMBH [DE]) 9. März 2000 (2000-03-09) * Spalte 3, Zeile 65 - Spalte 5, Zeile 5; Abbildungen 1,2 * * Spalte 2, Zeile 26 - Spalte 3, Zeile 11 * ----- | 1-19 | INV. G01N21/35 G01N21/55 |
| A | US 4 045 600 A (WILLIAMS GARY E) 30. August 1977 (1977-08-30) * Spalte 8, Zeile 6 - Zeile 20 * ----- | 1-19 | |
| A | DE 196 12 877 C1 (FAHMY KARIM DR [DE]) 25. September 1997 (1997-09-25) * Abbildung 2 * ----- | 1-19 | |
| E | US 2006/165342 A1 (PAU STANLEY [US] ET AL) 27. Juli 2006 (2006-07-27) * Absatz [0024] - Absatz [0031]; Abbildung 1 * ----- | 1-19 | |
| | | | RECHERCHIERTE SACHGEBIETE (IPC)  G01N |

Der vorliegende Recherchenbericht wurde für alle Patentansprüche erstellt

| Recherchenort | Abschlußdatum der Recherche | Prüfer |
|---|---|---|
| München | 19. Oktober 2006 | Consalvo, Daniela |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

13

**ANHANG ZUM EUROPÄISCHEN RECHERCHENBERICHT**
**ÜBER DIE EUROPÄISCHE PATENTANMELDUNG NR.**

EP 06 11 3946

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-10-2006

| Im Recherchenbericht angeführtes Patentdokument | | Datum der Veröffentlichung | Mitglied(er) der Patentfamilie | | Datum der Veröffentlichung |
|---|---|---|---|---|---|
| DE 19837437 | A1 | 09-03-2000 | AU<br>WO<br>EP | 5515799 A<br>0011432 A1<br>1212582 A1 | 14-03-2000<br>02-03-2000<br>12-06-2002 |
| US 4045600 | A | 30-08-1977 | KEINE | | |
| DE 19612877 | C1 | 25-09-1997 | KEINE | | |
| US 2006165342 | A1 | 27-07-2006 | KEINE | | |

EPO FORM P0461

Für nähere Einzelheiten zu diesem Anhang : siehe Amtsblatt des Europäischen Patentamts, Nr.12/82